# EUROPEAN PATENT SPECIFICATION

(11) **EP 2 501 162 B1**
(45) Date of publication and mention of the grant of the patent: **26.04.2017**
(21) Application number: 09851196.7
(22) Date of filing: 11.11.2009
(51) Int. Cl.: H04M 3/22, H04W 4/20

(54) **METHOD, DEVICE AND SYSTEM FOR PROCESSING DOWNLINK SIGNAL**
VERFAHREN, VORRICHTUNG UND SYSTEM ZUR VERARBEITUNG VON DOWNLINK-SIGNALEN
PROCÉDÉ, DISPOSITIF ET SYSTÈME DE TRAITEMENT DE SIGNAL DE LIAISON DESCENDANTE

(43) Date of publication of application: 19.09.2012
(73) Proprietor: Huawei Technologies Co., Ltd., Longgang District Shenzhen, Guangdong 518129 (CN)
(72) Inventor: LI, Hongxuan, Shenzhen Guangdong 518129 (CN); CHEN, Guangfu, Shenzhen Guangdong 518129 (CN); HU, Bo, Shenzhen Guangdong 518129 (CN)
(74) Representative: Kreuz, Georg Maria
(86) International application number: PCT/CN2009/074894
(87) International publication number: WO 2011/057440

(56) References cited:
- EP-A1- 0 568 240
- EP-A1- 1 791 381
- EP-A2- 0 781 062
- WO-A2-2007/122617
- CN-A- 1 159 722
- CN-A- 1 581 906
- CN-A- 101 098 559
- US-A- 5 809 133
- US-A1- 2007 021 097
- US-A1- 2007 022 481
- US-A1- 2009 209 196
- US-B1- 6 408 067

## Description

### FIELD OF THE INVENTION

The present invention relates to the communication field, and in particular, to a method, device, and system for processing a downlink signal.

### BACKGROUND OF THE INVENTION

In a radio communication network, such as a GSM (Global System for Mobile communications, global system for mobile communications) system, a downlink DTMF (dual tone multi-frequency, Dual Tone Multi-Frequency) signal refers to downlink DTMF signaling (DTMF signaling) and a downlink DTMF frame in a BBS (base station subsystem, Base Station Subsystem) system.

According to the provisions of the CCITT (Consultative Committee on International Telegraphy and Telephony, consultative committee on international telegraphy and telephony), a DTMF signal has a maximum of 10 numbers per second, namely, the cycle is 100 ms, in which the duration of the DTMF signal is not shorter than 45 ms, and not longer than 55 ms; and the rest of the time is a mute signal used for distinguishing two DTMF signals.

In some regions, the downlink DTMF signal may be used maliciously, for example, the downlink DTMF signal is used to control an explosive device. To eliminate the hazards, radio interference can be implemented to the communication network, but the interferences result in the poor quality of the communication network in those regions. How to eliminate the safety hazards and prevent the malicious use of the downlink DTMF signal without affecting the network quality is a problem in urgent need of solutions at present.

EP1791381A1 discloses a method for controlling calls in a radio communication network arranged for routing incoming calls to radio terminals. In order to inhibit incoming calls, a cell ID or a location area received from the UE in a SIP message is taken into account. In case the UE is located in an area corresponding to the cell ID, any incoming call from the IMS network will be prohibited. Especially, a communication signaling (SIP UPDATE message) is not forwarded to the UE by the S-CSCF. In this way, an incoming call of the UE is terminated, since the IMS session establishment is stopped.

EP0568240A1 discloses a method for selectively controlling the propagation of DTMF-signals. The method relates to a fixed-line telephone system. Specially, the DTMF trigger in the method is used for multi-party conferencing. A network user transmits an enabling DTMF trigger to a DTMF SDB via a communication channel (assuming the network user wished to prohibit subsequently transmitted DTMF signals from being propagated to another network user). The transmission of a disabling DTMF trigger by network user may be effected at any time during a call. This disabling DTMF trigger is transmitted to DTMF SDB via communications channel. In response to detecting this disabling DTMF trigger, DTMF SDB disables any restrictions on the propagation of subsequent DTMF signals. Further, before a voice channel is completed, a switch 105 (reference signs relate to the figures of EP0568240A1) sends a control message to a signal generator 204 of DTMF SDB 104, which initiates the transmission of an audible prompt to the Network user 107. The Network user 107 transmits an enabling DTMF trigger to DTMF SDB 104 via communications channel 110 (assuming network user 107 wished to prohibit subsequently transmitted DTMF signals from being propagated to network user 109). In response to detecting this disabling DTMF trigger, DTMF SDB 104 disables any restrictions on the propagation of subsequent DTMF signals, and transmits an indicative control message to the switch. Upon receipt of the control message, the switch 105 instructs processor 304 to complete a voice channel connection between network users 107 and 109 via LEC 108.

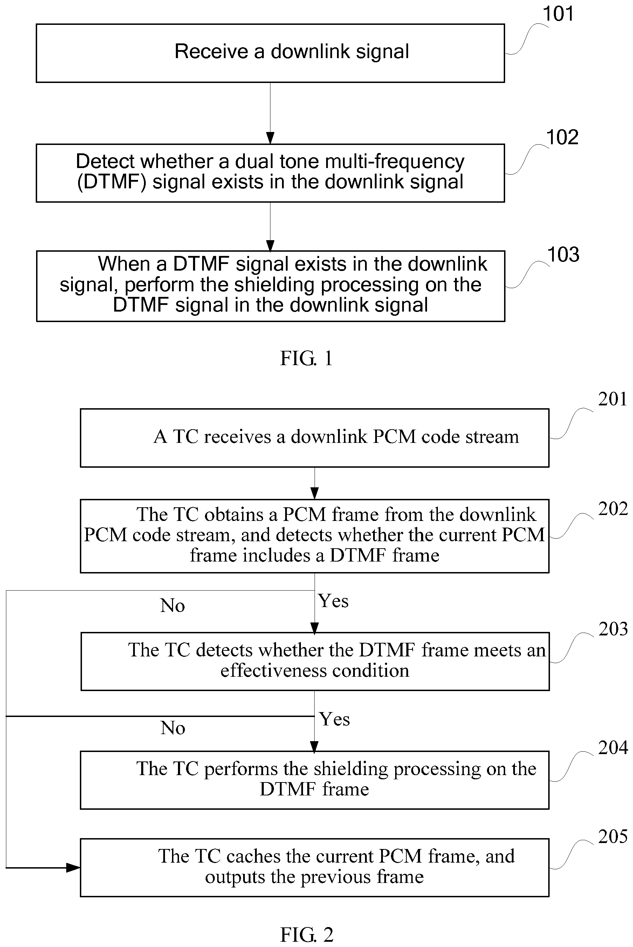

EP0781062A2 discloses a method for operating a radiotelephone system. The method includes the steps of: (a) detecting a reception of a start of a DTMF signal from a Public Switched Telephone Network; (b) constructing a first message for indicating a PSTN telephone keypad key that corresponds to the detected start of the DTMF signal; (c) transmitting the first message over a radio channel; (d) receiving the first message from the radio channel with a radiotelephone; (e) responsive to the received first message, generating a corresponding DTMF audio tone within the radiotelephone;(f) detecting a reception of a termination of the DTMF signal from the Public Switched Telephone Network; (g) constructing a second message for indicating the PSTN telephone keypad key that corresponds to the detected termination of the DTMF signal; (h) transmitting the second message over the radio channel; (i) receiving the second message from the radio channel with the radiotelephone; and (j) responsive to the received second message, terminating the generation of the corresponding DTMF audio tone within the radiotelephone. Two solutions are provided. As shown in FIG. 1, one of the solutions is carried out by a Mobile Switching Center (MSC). As shown in FIG. 2, the other solution is carried out by a base station subsystem (BSS). In the solution of FIG. 2, the DTMF detector 18b (reference signs relate to the figures of EP0781062A2) located in a speech transcoder 18a detects DTMF signals from the PCM input 19, and two techniques are provided for transmitting DTMF signals to the MS 20. The first technique uses the DTMF signaling generator 18c to generate a predetermined coded speech frame containing the DTMF keypad value. The predetermined coded speech frame is transmitted over a downlink speech radio channel to the MS 20. The second technique uses the DTMF signaling generator 18c to generate the Start/Stop DTMF messages which are output on bus 22b to the MSC 16. The MSC 16 then routes the Start/Stop DTMF messages over a signaling channel to the MS 20.

### SUMMARY OF THE INVENTION

The embodiments of the present invention aim to shield a downlink Dual Tone Multi-Frequency signal to prevent the malicious use of the downlink DTMF signal without affecting the network quality.

An embodiment of the present invention provides a method for processing a downlink signal for a called terminal by a transcoder in a radio communication network for preventing a malicious use of a downlink dual tone multi-frequency, DTMF, signal, which includes:
receiving the downlink signal;
detecting whether a DTMF signal exists in the downlink signal; and
when a DTMF signal exists in the downlink signal, performing shielding processing on the DTMF signal in the downlink signal; otherwise not processing the received PCM code stream and sending the PCM code stream directly to the called terminal;
wherein:
   the receiving the downlink signal is: receiving the downlink signal in the form of a downlink PCM code stream;
   the detecting whether a DTMF signal exists in the downlink signal is: obtaining a PCM frame from the downlink PCM code stream, and detecting whether the PCM frame comprises a DTMF frame by detecting whether row and column frequencies corresponding to a DTMF signal exists in the frequency domain of the PCM frame; and
   the performing the shielding processing on the DTMF signal in the downlink signal is: performing the shielding processing on the DTMF frame by either modifying the value of the PCM frame, adding further PCM frames, or discarding the PCM frame such that the DTMF signal in the PCM code stream cannot be recognized by the called terminal.

An embodiment of the present invention further provides a transcoder for processing a downlink signal for a called terminal in a radio communication network for preventing a malicious use of a downlink dual tone multi-frequency, DTMF, signal, which includes:
a receiving unit, configured to receive the downlink signal;
a detection unit, configured to detect whether a DTMF signal exists in the downlink signal; and
a processing unit, configured to, when a DTMF signal exists in the downlink signal, perform shielding processing on the DTMF signal in the downlink signal, otherwise not processing the received PCM code stream and sending the PCM code stream directly to the called terminal;
wherein:
the receiving unit is further configured to receive the downlink signal in the form of a downlink PCM code stream;
the detection unit is further configured to: obtain a PCM frame from the downlink PCM code stream, and detect whether the downlink PCM frame comprises a DTMF frame by detecting whether row and column frequencies corresponding to a DTMF signal exists in the frequency domain of the PCM frame; and the processing unit is further configured to: when the downlink PCM frame comprises a DTMF frame, perform the shielding processing on the DTMF frame by either modifying the value of the PCM frame, adding further PCM frames, or discarding the PCM frame
the DTMF signal in the PCM code stream cannot be recognized by the called terminal.

With the method and device for processing a downlink signal provided in the embodiments of the present invention, downlink DTMF signaling in a downlink message and a downlink DTMF frame in the downlink PCM frame can be detected, and the downlink DTMF signaling and the downlink DTMF frame can be shielded, so as to prevent the malicious use of a downlink DTMF signal.

### BRIEF DESCRIPTION OF THE DRAWINGS

FIG. 1 is a schematic flow chart of a method for processing a downlink signal according to an embodiment of the present invention;
FIG. 2 is a schematic flow chart of a method for shielding a DTMF signal in a downlink PCM code stream through a TC according to an embodiment of the present invention;
FIG. 3 is a schematic flow chart of a method for shielding downlink DTMF signaling through a BSC according to an embodiment of the present invention;
FIG. 4 is a schematic structural diagram of a device for processing a downlink signal according to an embodiment of the present invention;
FIG. 5 is another schematic structural diagram of a device for processing a downlink signal according to an embodiment of the present invention; and
FIG. 6 is a schematic structural diagram of a system for processing a downlink signal according to an embodiment of the present invention.

### DETAILED DESCRIPTION OF THE EMBODIMENTS

In order to illustrate the objectives, technical solutions, and advantages of the present invention more clearly, the present invention is described in detail in the following with reference to the accompanying drawings and embodiments. It should be understood that the embodiments herein are provided for describing the present invention and not intended to limit the present invention.

FIG. 1 is a schematic flow chart of a method for processing a downlink signal according to an embodiment of the present invention. As shown in FIG. 1, the embodiment includes the following steps.

### 101: Receive a downlink signal.

By taking a GSM system as an example, at an Abis/Um interface, downlink DTMF signaling is borne on the LAPD (Link Access Protocol on D channel, Link Access Protocol on D channel); a downlink DTMF frame is superposed with user voice information on the same channel through an encoding algorithm, such as an FR (full rate, Full Rate), an EFR (enhanced full rate, Enhanced Full Rate), an HR (half rate), or an AMR (adaptive multi-rate, Adaptive Multi-Rate); and at the A interface, the downlink DTMF signaling is borne on the signaling system No. 7, and represented as a PCM code stream in a dual tone multiple-frequency form, in which the downlink DTMF frame is constituted by 8 frequencies, including 4 row frequencies and 4 column frequencies. Each DTMF signal uniquely is constituted by one row frequency and one column frequency.

The step may further be: a TC (transcoder, Transcoder) receives a downlink PCM code stream from the A interface. The TC can be located inside a BSC, or can also be a device independent from the BSC.

In addition, a BSC (base station controller, Base Station Controller) may also receive a downlink signal from the LAPD or signaling system No. 7, and after decoding, obtain the L3 application layer message included therein.

### 102: Detect whether a DTMF signal exists in the downlink signal.

In the step, the detecting whether a DTMF signal exists in the downlink signal may be that the TC obtains a PCM frame from the PCM code stream (which may further be: obtaining a PCM frame by a unit of 20 ms), and detects whether the PCM frame includes a DTMF signal, that is, whether the PCM frame includes a DTMF frame, in which the detection may further be performed through the Discrete Fourier Transform.

In addition, the detecting whether the downlink signal is a DTMF signal may also be that: the BSC detects whether the L3 (layer 3) application layer message is DTMF signaling.

### 103: When a DTMF signal exists in the downlink signal, perform the shielding processing on the DTMF signal in the downlink signal.

If it is detected from the PCM code stream received by the TC that the current PCM frame includes a DTMF frame, the shielding processing is performed on the DTMF frame, that is, the shielding processing is performed on the DTMF signal in the PCM code stream, so as to achieve the objective of changing the original content in the PCM code stream and disturbing the DTMF signal included therein.

If it is detected from the L3 application layer message received by the BSC that the application layer message is DTMF signaling, one or any combination of operations, such as insertion, deletion, and modification, can be performed on the DTMF signaling to change the original DTMF signaling, so as to shield the DTMF signaling.

With the method for processing a downlink signal provided in the embodiment of the present invention, downlink DTMF signaling in a downlink message and/or a DTMF frame in a downlink PCM frame can be detected, and the downlink DTMF signaling and/or the downlink DTMF frame can be correspondingly shielded, so as to prevent the malicious use of a downlink DTMF signal.

In another embodiment of the present invention, in step 102, when the TC detects that the downlink PCM frame includes a DTMF signal, the TC can further detect whether the DTMF signal meets an effectiveness condition; and perform the shielding processing on the DTMF signal in the downlink PCM frame when the effectiveness condition is met.

If it is detected that the downlink PCM frame does not include a DTMF signal, or that the downlink PCM frame includes a DTMF signal but the DTMF signal does not meet the effectiveness condition, the downlink PCM code stream is not processed and is directly sent to a called terminal.

In the method for processing a downlink signal provided in the embodiment, whether a DTMF signal is effective is further detected, an effective DTMF signal is shielded, and the DTMF signal can be shielded while the downlink voice quality of a user is guaranteed.

When the downlink DTMF signal includes downlink DTMF signaling (DTMF signaling) and a downlink DTMF frame, in order to shield the downlink DTMF signal, both the downlink DTMF signaling and the downlink DTMF frame can be shielded. In the embodiment of the present invention, the downlink DTMF signaling is shielded by a BSC, and the downlink DTMF frame is shielded by a TC.

FIG. 2 is a schematic flow chart of a method for shielding a DTMF signal in a downlink PCM code stream by a TC according to an embodiment of the present invention. As shown in FIG. 2, the embodiment includes the following steps.

201: A TC receives a downlink PCM code stream.

Further, the TC can receive a downlink PCM code stream from the A interface.

202: The TC obtains a PCM frame from the downlink PCM code stream, and detects whether the current PCM frame includes a DTMF frame.

At the A interface, a digital sampling rate is fixed at 8 Kpbs, and the sample data in 20 ms forms a PCM frame. Further, a PCM frame may be formed after digital sampling on a transmission line port, and the detection is performed through the Discrete Fourier Transform, to detect whether the row and column frequencies corresponding to the DTMF signal exist in the frequency domain of the PCM frame.

During the detection of the DTMF signal, not only DTMF fundamental wave information is detected, but also secondary harmonic information thereof can be considered. A speech signal has large amplitude in both the fundamental wave and the secondary harmonic, and a DTMF signal has large amplitude only in the fundamental wave. Therefore, by detecting the secondary harmonic, a DTMF signal and a speech signal can be distinguished. For example, a digital sampling frequency of a landline telephone is fixed to be 8k times per second, but the standard regulates that at most 10 DTMF signals are generated per second, and that the actual duration of each signal is at least 45 ms and not longer than 55 ms. Meanwhile, the standard defines an interval between two successive DTMF signals. In this way, when the frequency domain information of the PCM frame is detected, a pause duration between different frequency domains is recorded at the same time. By combining the frequency domain information and the pause duration, whether a downlink DTMF signal exists and which downlink DTMF signal it is can be determined.

When it is detected that the current PCM frame includes a DTMF frame, the process proceeds to 203. When it is detected that the current PCM frame does not include a DTMF frame, the process proceeds to 205.

203: The TC detects whether the DTMF frame meets an effectiveness condition.

It is mentioned above that when the TC detects that the downlink PCM frame includes a DTMF frame, the TC can further detect whether the DTMF frame meets an effectiveness condition. When it is detected that the current DTMF frame meets the effectiveness condition, the process proceeds to 204. When it is detected that the current DTMF frame does not meet the effectiveness condition, the process proceeds to 205.

Further, it can be detected whether the following conditions are met:
1. Detect whether the signal strength of the DTMF frame is large enough, and detect whether the square amplitude sum of row and column frequency components is larger than a threshold value regulated in the protocol; and when higher than the threshold value, the strength of the DTMF signal is considered large enough.
2. Compare whether the maximum frequency component difference of row and column frequencies is lower than a threshold value, and when lower, the condition is met.
3. Determine the spectral component of a row and column frequency group. When the maximum value of the spectral component of the row and column frequency group is higher than the spectral component of a general audio signal and exceeds a threshold value, it is considered that a DTFM frame is superposed on an audio signal.
4. Determine whether the signal includes stable digital information. When the digital information is detected twice successively, the digital information is considered stable.
5. Determine whether a sufficient tone duration exists between two successive DTMF signals detected. When the interval exceeds a certain duration threshold, the duration interval is considered sufficient.

In one case, when the foregoing conditions are met at the same time, it is considered that the DTMF signal meets the effectiveness condition and the DTMF signal is an effective signal. In another case, if one or more of the foregoing conditions are met, it is considered that the DTMF signal meets the effectiveness condition and the DTMF signal is an effective signal. It should be noted that, the step is not indispensable. If the step is not performed, when it is detected in 202 that the current PCM frame includes a DTMF frame, the process proceeds to step 204.

204. The TC performs the shielding processing on the DTMF frame.

That is, the TC performs the shielding processing on the downlink PCM code stream, and outputs the processed PCM code stream, so as to shield the downlink DTMF signal included in the downlink PCM code stream.

A processing manner may further be as follows.

If it is detected from the PCM code stream received by the TC that the current PCM frame includes a DTMF signal, multiple manners can be used to process the PCM code stream, which are as follows.
1. Assign a zero to the value of a previous PCM frame of the current PCM frame, output the assigned previous PCM frame, assign a zero to the value of the current PCM frame and cache the current PCM frame (output the current frame in the processing of the next frame).
2. Alternatively, modify the value of the previous PCM frame of the current PCM frame, output the modified previous PCM frame, modify the value of the current PCM frame and cache the current PCM frame (output the current frame in the processing of the next frame).
3. Alternatively, add several PCM frames (which may be DTMF frames or may not be DTMF frames) at any position (in the front, behind or middle) of the previous PCM frame or delete several PCM frames at any position of the previous PCM frame, output the processed PCM frame, and cache the current PCM frame (output the current frame in the processing of the next frame).
4. Alternatively, output the previous PCM frame, and do not output, modify or cache the current PCM frame.

Persons skilled in the art can understand that other shielding methods can be obtained through the foregoing examples of the methods for shielding a PCM code stream, as long as the original content of the PCM code stream is changed and the objective of disturbing the DIMF signaling included therein is achieved.

205. The TC caches the current PCM frame, and outputs the previous frame (if the previous frame exists).

In the embodiment of the present invention, the DTMF signal in the PCM code stream is shielded by the TC, so that voice data does not need to be encoded and decoded again, and the loss of the voice quality resulting from multiple times of encoding and decoding is avoided. Moreover, additional hardware devices do not need to be added, and software upgrade of the TC is only needed for implementation, thereby reducing the reconstruction of the current network, and further achieving the objective of shielding the DTMF signal in the downlink PCM code stream, and preventing the malicious use of the downlink DTMF signal.

The embodiment in FIG. 2 can be implemented by the BSC, as long as the BSC includes corresponding function modules, and the process is the same as that in the embodiment shown in FIG. 2, which is not described here.

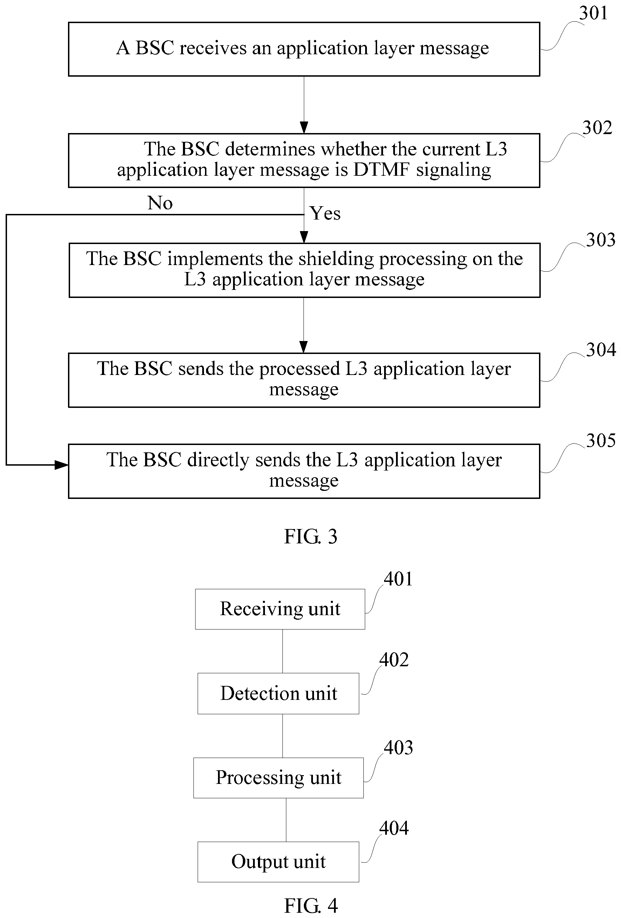

FIG. 3 is a schematic flow chart of a method for shielding DTMF signaling through a BSC according to an embodiment of the present invention. As shown in FIG. 3, the embodiment includes the following steps.

301: The BSC receives an application layer message.

In the step, further, the BSC can receive a downlink signal from the LAPD or the signaling system No. 7, and after decoding, obtain an L3 application layer message included therein.

302: The BSC determines whether the current L3 application layer message is DTMF signaling.

The specific determination method is described correspondingly in the 3GPP (Third Generation Partnership Project, third generation partnership project) protocol, and is not described here.

When it is determined that the message is DTMF signaling, the process proceeds to 303; and when it is determined that the message is not DTMF signaling, the process proceeds to 305.

303. The BSC performs the shielding processing on the L3 application layer message (namely, the DTMF signaling).

There are multiple processing manners, and one or any combination of operations, such as insertion, deletion, and modification, can be implemented on the DTMF signaling, as long as the original content of the DTMF signaling is changed and a called terminal cannot recognize it. For example, when it is detected that the L3 application layer message is equal to "START DTMF", the information type is modified as "STOP DTMF".

After the processing is completed, the process proceeds to 304.

304. The BSC sends the processed L3 application layer message (namely, the DTMF signaling).

305. The BSC directly sends the message.

In this way, when the called terminal receives the DTMF signaling, the called terminal cannot learn the original information included in the DTMF signaling.

With the method for shielding the downlink DTMF signaling through the BSC provided in the embodiment of the present invention, the objective of shielding the downlink DTMF signaling is achieved and the malicious use of the downlink DTMF signaling can be prevented. The embodiment of the present invention can be implemented by reconstructing the BSC only, which does not require reconstruction of a core network and a base station and has small influence.

FIG. 4 is a schematic structural diagram of a device for shielding a downlink dual tone multi-frequency signal according to an embodiment of the present invention. As shown in FIG. 4, the device includes:
a receiving unit 401, configured to receive a downlink signal;
a detection unit 402, configured to detect whether a DTMF signal exists in the downlink signal; and
a processing unit 403, configured to, when a DTMF signal exists in the downlink signal, perform the shielding processing on the DTMF signal in the downlink signal.

The device shown in FIG. 4 can be a TC or BSC. The TC can be a TC located inside the BSC, or can be a device independent from the BSC.

When the device is the TC or BSC (the BSC includes corresponding function modules), the case is as follows.

The receiving unit 401 is further configured to receive a downlink PCM code stream, for example, receive the downlink PCM code stream from an A interface.

The detection unit 402 is further configured to obtain a PCM frame from the downlink PCM code stream, and detect, through the Discrete Fourier Transform, whether the downlink PCM frame includes a DTMF frame, and for the specific detection method, reference can be made to the description in step 202 in the method embodiment, and details are not described here.

The processing unit 403 is further configured to, when the downlink PCM frame includes a DTMF frame, perform the shielding processing on the downlink DTMF signal with the following specific method.
1. Assign a zero to a previous PCM frame of the current PCM frame, output the assigned previous PCM frame, assign a zero to the value of the current PCM frame and cache the current PCM frame (output the current frame in the processing of the next frame).
2. Alternatively, modify the value of the previous PCM frame of the current PCM frame, output the modified previous PCM frame, modify the value of the current PCM frame and cache the current PCM frame (output the current frame in the processing of the next frame).
3. Alternatively, add several PCM frames (which may be DTMF frames or may not be DTMF frames) at any position (in the front, behind or middle) of the previous PCM frame or delete several PCM frames at any position of the previous PCM frame, output the processed PCM frame, and cache the current PCM frame (output the current frame in the processing of the next frame).
4. Alternatively, output the previous PCM frame, and do not output, modify or cache the current PCM frame.

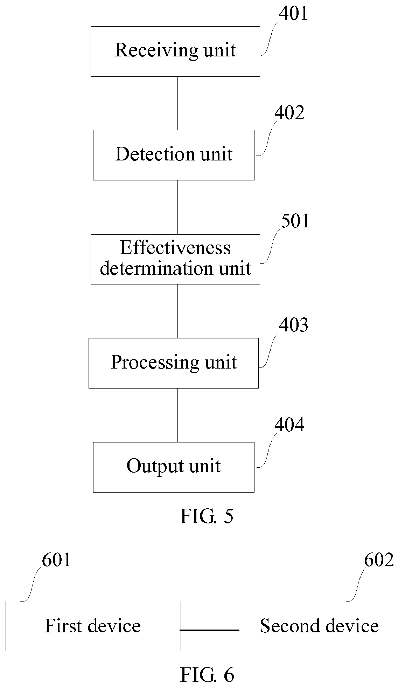

Here, as shown in FIG. 5, the device can further include:
an effectiveness determination unit 501, configured to, when the detection unit detects that the downlink PCM frame includes a DTMF frame, determine whether the DTMF frame meets an effectiveness condition.

Further, it can be detected whether the following conditions are met.
1. Detect whether the signal strength of the DTMF frame is large enough, and detect whether the square amplitude sum of row and column frequency components is larger than a threshold value regulated in the protocol; and when higher than the threshold value, the strength of the DTMF signal is considered large enough.
2. Compare whether the maximum frequency component difference of row and column frequencies is lower than a threshold value; and when lower, the condition is met.
3. Determine the spectral component of a row and column frequency group. When the maximum value of the spectral component of the row and column frequency group is higher than the spectral component of a general audio signal and exceeds a threshold value, it is considered that a DTFM frame is superposed on an audio signal.
4. Determine whether the signal includes stable digital information. When the digital information is detected twice successively, the digital information is considered stable.
5. Determine whether a sufficient tone duration exists between two successive DTMF signals detected. When the interval exceeds a certain duration threshold, the duration interval is considered sufficient.

In one case, when the foregoing conditions are met at the same time, it is considered that the DTMF signal meets the effectiveness condition and the DTMF signal is an effective signal. In another case, if one or more of the foregoing conditions are met, it is considered that the DTMF signal meets the effectiveness condition and the DTMF signal is an effective signal.

Here, the processing unit 403 is further configured to, when the DTMF frame meets the effectiveness condition, perform the shielding processing on the DTMF frame.

When the detection unit 402 detects that the downlink PCM frame does not include a DTMF frame, or that the downlink PCM frame includes a DTMF frame but the DTMF frame does not meet the effectiveness condition, the detection unit 403 caches the current frame, and sends the current frame in the processing of the next frame.

For the device for processing a downlink signal provided in the embodiment of the present invention, whether a DTMF signal is effective is further detected, an effective DTMF signal is shielded, and the DTMF signal can be shielded while voice quality is guaranteed to the greatest extent.

In an embodiment of the present invention, when the device shown in FIG. 4 is a BSC, the case is as follows.

The receiving unit 401 is further configured to receive an application layer message, and
the receiving unit 401 can receive downlink information from the LAPD or the signaling system No. 7, and after decoding, obtain the L3 application layer message included therein.

The detection unit 402 is further configured to detect whether the application layer message is DTMF signaling, and
the specific detection method is correspondingly described in the GSM/3GPP protocol, and is not described here.

The processing unit 403 is further configured to, when the detection unit detects that the application layer message is DTMF signaling, perform one or any combination of operations, such as insertion, deletion, and modification, on the DTMF signaling, and send the processed application layer message, which can be the processed L3 application layer message (namely, the DTMF signaling).

The operations, such as insertion, deletion, and modification, are performed, as long as the original content of the DTMF signaling is changed and a called terminal cannot recognize it.

With the device BSC for processing a downlink signal provided in the embodiment of the present invention, the objective of shielding the downlink DTMF signaling is achieved, and a terrorist can be prevented from controlling a called mobile phone through the downlink DTMF signaling to detonate a bomb. In addition, when the processing is implemented on the BSC, the reconstruction of the current network can be reduced.

FIG. 6 is a schematic structural diagram of a system for processing a downlink signal according to an embodiment of the present invention. As shown in FIG. 6, the system includes the following.

A first device 601 (which is a BSC in this embodiment) is configured to receive an application layer message, detect whether the application layer message is DTMF signaling, and perform the shielding processing on the DTMF signaling when detecting that the application layer message is the DTMF signaling.

The shielding processing can be one or any combination of operations of insertion, deletion, and modification, and the processed application layer message is sent, to change the original content of the DTMF signaling, so that a called terminal cannot recognize it, thereby achieving the shielding of the downlink DTMF signaling.

In this embodiment, for the specific process that the BSC shields the downlink DTMF signaling, reference can be made to the description in the embodiment shown in FIG. 3, and details are not described here.

A second device 602 (which is a TC or a BSC that includes the corresponding function modules in this embodiment) is configured to receive a downlink PCM code stream, obtain a PCM frame from the downlink PCM code stream; detect whether the downlink PCM frame includes a DTMF frame, and when detecting that the downlink PCM frame includes a DTMF frame, perform the shielding processing on the DTMF frame in the downlink PCM frame.

The second device 602 is further configured to, when it is detected that the downlink PCM frame includes a DTMF frame, determine whether the DTMF frame meets an effectiveness condition, and perform the shielding processing on the DTMF signal in the downlink PCM frame when the effectiveness condition is met.

In this embodiment, for the specific process of shielding the downlink DTMF frame, reference can be made to the description in the embodiment shown in FIG. 2, and details are not described here.

In this embodiment, the second device 602 (for example, the TC) can be located inside the first device 601 (for example, the BSC), or can also be a device independent from the first device 601.

With the system for processing a downlink signal provided in this embodiment of the present invention, the downlink DTMF signaling in the downlink message and the DTMF frame in the downlink PCM frame can be detected, and the downlink DTMF signaling and the downlink DTMF frame can be shielded, so as to prevent the malicious use of the downlink DTMF signal.

The embodiment of the present invention can be implemented in a radio communication system, such as a GSM system and a WCDMA (Wideband Code Division Multiple Addressing, wideband code division multiple addressing) system. For the implementation in the GSM system, the embodiment can be implemented on a BTS (Base Transceiver Station, base transceiver station). For the implementation in the WCDMA system, the embodiment can be implemented on an RNC (Radio Network Controller, radio network controller).

It should be noted that no stand-alone functional component needs to be introduced into the embodiments of the present invention, and that the present invention may be implemented through software plus a necessary universal hardware platform. Therefore, the essence of the technical solutions of the present invention or contributions to the prior art may be embodied in a software product. The software product is stored in a storage medium, and incorporates several instructions for executing the method specified in any embodiment of the present invention. The storage medium may be a ROM/RAM, a magnetic disk, a compact disk, and so on.

## Claims

1. A method for processing a downlink signal for a called terminal by a transcoder in a radio communication network, for preventing a malicious use of a downlink dual tone multi-frequency, DTMF, signal, **characterized by** comprising:
receiving (101, 201) the downlink signal in the form of a downlink PCM code stream;
detecting (102, 202) whether a DTMF signal exists in the downlink signal; **characterized in that**:
when a DTMF signal exists in the downlink signal, performing (103, 204) shielding processing on the DTMF signal in the downlink signal; otherwise not processing the received PCM code stream and sending the PCM code stream directly to the called terminal;
wherein:
the receiving the downlink signal is: receiving (201) the downlink signal in the form of a downlink PCM code stream;
the detecting whether a DTMF signal exists in the downlink signal is: obtaining (202) a PCM frame from the downlink PCM code stream, and detecting (202) whether the PCM frame comprises a DTMF frame by detecting whether row and column frequencies corresponding to a DTMF signal exists in the frequency domain of the PCM frame; and
the performing the shielding processing on the DTMF signal in the downlink signal is: performing (204) the shielding processing on the DTMF frame by either modifying the value of the PCM frame, adding further PCM frames, or discarding the PCM frame such that the DTMF signal in the PCM code stream cannot be recognized by the called terminal.

2. The method according to claim 1, wherein:
when detecting whether the DTMF signal exists in the downlink signal, not only DTMF fundamental wave information is detected, but also secondary harmonic information is detected.

3. The method according to claim 2, wherein the performing shielding processing on the application layer message is further: performing one or any combination of operations of insertion, deletion, and modification on the DTMF signaling.

4. A transcoder for processing a downlink signal for a called terminal in a radio communication network for preventing a malicious use of a downlink dual tone multi-frequency, DTMF, signal, **characterized by** comprising:
a receiving unit (401), configured to receive the downlink signal in the form of a downlink PCM code stream;
a detection unit (402), configured to detect whether a DTMF signal exists in the downlink signal;
**characterized in that** the transcoder further comprises:
a processing unit (403), configured to, when a DTMF signal exists in the downlink signal, perform the shielding processing on the DTMF signal in the downlink signal, otherwise not processing the received PCM code stream and sending the PCM code stream directly to the called terminal;
wherein:
the receiving unit is further configured to receive the downlink signal in the form of a downlink PCM code stream;
the detection unit is further configured to: obtain a PCM frame from the downlink PCM code stream, and detect whether the downlink PCM frame comprises a DTMF frame by detecting whether row and column frequencies corresponding to a DTMF signal exists in the frequency domain of the PCM frame; and
the processing unit is further configured to: when the downlink PCM frame comprises a DTMF frame, perform the shielding processing on the DTMF frame by either modifying the value of the PCM frame, adding further PCM frames, or discarding the PCM frame such that the DTMF signal in the PCM code stream cannot be recognized by the called terminal.

5. The transcoder according to claim 4, wherein
when the detection unit detects whether the DTMF signal exists in the downlink signal, the detection unit detects not only DTMF fundamental wave information, but also secondary harmonic information.

6. The transcoder according to claim 4, wherein the processing unit is further configured to:
perform one or any combination of operations of insertion, deletion, and modification on the DTMF signaling.

## Patentansprüche

1. Verfahren zum Verarbeiten eines Abwärtsstreckensignals für ein angerufenes Endgerät durch einen Transcoder in einem Funkkommunikationsnetz zum Verhindern einer bösartigen Nutzung eines Abwärtsstreckensignals für "Dual Tone Multi-Frequency", DTMF, **dadurch gekennzeichnet, dass** es Folgendes umfasst:
Empfangen (101, 201) des Abwärtsstreckensignals in Form eines Abwärtsstrecken-PCM-Codestroms;
Detektieren (102, 202), ob ein DTMF-Signal im Abwärtsstreckensignal vorhanden ist; **gekennzeichnet durch** Folgendes:
wenn ein DTMF-Signal im Abwärtsstreckensignal vorhanden ist, Durchführen (103, 204) einer Abschirmungsverarbeitung am DTMF-Signal im Abwärtsstreckensignal; andernfalls Nichtverarbeiten des empfangenen PCM-Codestroms und Senden des PCM-Codestroms direkt an das angerufene Endgerät;
wobei:
das Empfangen des Abwärtsstreckensignals Folgendes ist: Empfangen (201) des Abwärtsstreckensignals in Form eines Abwärtsstrecken-PCM-Codestroms;
das Detektieren, ob ein DTMF-Signal im Abwärtsstreckensignal vorhanden ist, Folgendes ist: Erhalten (202) eines PCM-Rahmens aus dem Abwärtsstrecken-PCM-Codestrom und Detektieren (202), ob der PCM-Rahmen einen DTMF-Rahmen umfasst, **durch** Detektieren, ob mit einem DTMF-Signal korrespondierende Zeilen- und Spaltenfrequenzen im Frequenzbereich des PCM-Rahmens vorhanden sind; und
das Durchführen der Abschirmungsverarbeitung am DTMF-Signal im Abwärtsstreckensignal Folgendes ist:
Durchführen (204) der Abschirmungsverarbeitung am DTMF-Rahmen **durch** entweder Modifizieren des Werts des PCM-Rahmens oder Hinzufügen weiterer PCM-Rahmen oder Verwerfen des PCM-Rahmens, sodass
das DTMF-Signal im PCM-Codestrom vom angerufenen Endgerät nicht erkannt werden kann.

2. Verfahren nach Anspruch 1, wobei:
beim Detektieren, ob das DTMF-Signal im Abwärtsstreckensignal vorhanden ist, nicht nur DTMF-Grundschwingungsinformationen detektiert werden, sondern auch Informationen zur zweiten Harmonischen detektiert werden.

3. Verfahren nach Anspruch 2, wobei das Durchführen einer Abschirmungsverarbeitung an der Anwendungsschichtnachricht weiter Folgendes ist: Durchführen von einem oder von beliebigen Kombinationen der Vorgänge des Einfügens, des Löschens und des Modifizierens in der DTMF-Signalisierung.

4. Transcoder zum Verarbeiten eines Abwärtsstreckensignals für ein angerufenes Endgerät in einem Funkkommunikationsnetz zum Verhindern einer bösartigen Nutzung eines Abwärtsstreckensignals für "Dual Tone Multi-Frequency", DTMF, **dadurch gekennzeichnet, dass** er Folgendes umfasst:
eine Empfangseinheit (401), die konfiguriert ist zum Empfangen des Abwärtsstreckensignals in Form eines Abwärtsstrecken-PCM-Codestroms;
eine Detektionseinheit (402), die konfiguriert ist zum Detektieren, ob ein DTMF-Signal im Abwärtsstreckensignal vorhanden ist;
**dadurch gekennzeichnet, dass** der Transcoder weiter Folgendes umfasst:
eine Verarbeitungseinheit (403), die, wenn ein DTMF-Signal im Abwärtsstreckensignal vorhanden ist, konfiguriert ist zum Durchführen der Abschirmungsverarbeitung am DTMF-Signal im Abwärtsstreckensignal, andernfalls Nichtverarbeiten des empfangenen PCM-Codestroms und Senden des PCM-Codestroms direkt an das angerufene Endgerät;
wobei:
die Empfangseinheit weiter konfiguriert ist zum Empfangen des Abwärtsstreckensignals in Form eines Abwärtsstrecken-PCM-Codestroms;
die Detektionseinheit weiter für Folgendes konfiguriert ist: Erhalten eines PCM-Rahmens aus dem Abwärtsstrecken-PCM-Codestrom und Detektieren, ob der Abwärtsstrecken-PCM-Rahmen einen DTMF-Rahmen umfasst, durch Detektieren, ob mit einem DTMF-Signal korrespondierende Zeilen- und Spaltenfrequenzen im Frequenzbereich des PCM-Rahmens vorhanden sind; und
die Verarbeitungseinheit weiter für Folgendes konfiguriert ist: wenn der Abwärtsstrecken-PCM-Rahmen einen DTMF-Rahmen umfasst, Durchführen der Abschirmungsverarbeitung am DTMF-Rahmen durch entweder Modifizieren des Werts des PCM-Rahmens oder Hinzufügen weiterer PCM-Rahmen oder Verwerfen des PCM-Rahmens, sodass
das DTMF-Signal im PCM-Codestrom vom angerufenen Endgerät nicht erkannt werden kann.

5. Transcoder nach Anspruch 4, wobei,
wenn die Detektionseinheit detektiert, ob das DTMF-Signal im Abwärtsstreckensignal vorhanden ist, die Detektionseinheit nicht nur DTMF-Grundschwingungsinformationen, sondern auch Informationen zur zweiten Harmonischen detektiert.

6. Transcoder nach Anspruch 4, wobei die Verarbeitungseinheit weiter für Folgendes konfiguriert ist:
Durchführen von einem oder von beliebigen Kombinationen der Vorgänge des Einfügens, des Löschens und des Modifizierens in der DTMF-Signalisierung.

## Revendications

1. Procédé de traitement d'un signal de liaison descendante pour un terminal appelé par un transcodeur dans un réseau de radiocommunication, destiné à empêcher une utilisation malveillante d'un signal multifréquence à double tonalité, DTMF, de liaison descendante, le procédé étant **caractérisé en ce qu'**il comprend les étapes consistant à :
recevoir (101, 201) le signal de liaison descendante sous la forme d'un flux codé PCM de liaison descendante ;
détecter (102, 202) si un signal DTMF est présent dans le signal de liaison descendante ; le procédé étant **caractérisé en ce qu'**il comprend les étapes consistant à :
si un signal DTMF est présent dans le signal de liaison descendante, appliquer (103, 204) un traitement de protection sur le signal DTMF dans le signal de liaison descendante ; dans le cas contraire, ne pas traiter le flux codé PCM reçu et envoyer le flux codé PCM directement au terminal appelé ;
dans lequel :
l'étape consistant à recevoir le signal de liaison descendante consiste à : recevoir (201) le signal de liaison descendante sous la forme d'un flux codé PCM de liaison descendante ;
l'étape consistant à détecter si un signal DTMF est présent dans le signal de liaison descendante consiste à : obtenir (202) une trame PCM à partir du flux codé PCM de liaison descendante, et détecter (202) si la trame PCM comprend une trame DTMF en détectant si des fréquences de ligne et de colonne correspondant à un signal DTMF sont présentes dans le domaine fréquentiel de la trame PCM ; et
l'étape consistant à appliquer le traitement de protection sur le signal DTMF dans le signal de liaison descendante consiste à :
appliquer (204) le traitement de protection sur la trame DTMF en modifiant la valeur de la trame PCM, ou bien en ajoutant d'autres trames PCM ou encore en écartant la trame PCM pour faire en sorte que le signal DTMF dans le flux codé PCM ne puisse pas être reconnu par le terminal appelé.

2. Procédé selon la revendication 1, dans lequel :
l'étape consistant à détecter si le signal DTMF est présent dans le signal de liaison descendante consiste à détecter non seulement des informations sur une onde fondamentale DTMF mais aussi des informations sur un harmonique secondaire.

3. Procédé selon la revendication 2, dans lequel l'étape consistant à appliquer un traitement de protection sur le message de couche application consiste en outre à :
exécuter l'une ou toute combinaison des opérations suivantes : une insertion, une suppression et une modification sur la signalisation DTMF.

4. Transcodeur pour le traitement d'un signal de liaison descendante pour un terminal appelé dans un réseau de radiocommunication, destiné à empêcher une utilisation malveillante d'un signal multifréquence à double tonalité, DTMF, de liaison descendante, le transcodeur étant **caractérisé en ce qu'**il comprend :
une unité de réception (401), configurée pour recevoir le signal de liaison descendante sous la forme d'un flux codé PCM de liaison descendante ;
une unité de détection (402), configurée pour détecter si un signal DTMF est présent dans le signal de liaison descendante ; le transcodeur étant **caractérisé en ce qu'**il comprend en outre :
une unité de traitement (403), configurée, si un signal DTMF est présent dans le signal de liaison descendante, pour appliquer un traitement de protection sur le signal DTMF dans le signal de liaison descendante ; dans le cas contraire, pour ne pas traiter le flux codé PCM reçu et pour envoyer le flux codé PCM directement au terminal appelé ;
dans lequel :
l'unité de réception est configurée en outre pour recevoir le signal de liaison descendante sous la forme d'un flux codé PCM de liaison descendante ;
l'unité de détection est configurée en outre pour : obtenir une trame PCM à partir du flux codé PCM de liaison descendante, et détecter si la trame PCM de liaison descendante comprend une trame DTMF en détectant si des fréquences de ligne et de colonne correspondant à un signal DTMF sont présentes dans le domaine fréquentiel de la trame PCM ; et
l'unité de traitement est configurée en outre pour : si la trame PCM de liaison descendante comprend une trame DTMF, appliquer le traitement de protection sur la trame DTMF en modifiant la valeur de la trame PCM, ou bien en ajoutant d'autres trames PCM ou encore en écartant la trame PCM pour faire en sorte que le signal DTMF dans le flux codé PCM ne puisse pas être reconnu par le terminal appelé.

5. Transcodeur selon la revendication 4, dans lequel
lorsque l'unité de détection détecte si le signal DTMF est présent dans le signal de liaison descendante, l'unité de détection détecte non seulement des informations sur une onde fondamentale DTMF mais aussi des informations sur un harmonique secondaire.

6. Transcodeur selon la revendication 4, dans lequel l'unité de traitement est configurée en outre pour : exécuter l'une ou toute combinaison des opérations suivantes : une insertion, une suppression et une modification sur la signalisation DTMF.
